# EUROPÄISCHE PATENTSCHRIFT

(11) **EP 0 361 174 B1**
(45) Veröffentlichungstag und Bekanntmachung des Hinweises auf die Patenterteilung: **17.03.1993**
(21) Anmeldenummer: 89116627.4
(22) Anmeldetag: 08.09.1989
(51) Int. Cl.: H02P 9/08, H02H 7/06

(54) **Schutzverfahren und Schutzeinrichtung zur Erfassung von Asynchronismus beim Frequenzanlauf einer Synchronmaschine**
Protection method and device for the detection of an asynchronism in the frequency start of a synchronous machine
Méthode et appareil de protection à détecter l'asynchronisme de démarrage à fréquence d'une machine synchrone

(30) Priorität: 27.09.1988 CH 3582/88
(43) Veröffentlichungstag der Anmeldung: 04.04.1990
(73) Patentinhaber: ASEA BROWN BOVERI AG, 5400 Baden (CH)
(72) Erfinder: Mäder, Rudolf, CH-8052 Zürich (CH)

(56) Entgegenhaltungen:
- DE-A- 3 742 555
- US-A- 3 784 896
- BROWN BOVERI MITT.,Band 70, Nr. 7/8, 1983, CH,Seiten 295 - 302; B. BOSE et al.:"Frequenzanlauf für Pumpspeicherwerke-Möglichkeiten und Optimierung"

## Beschreibung

### Technisches Gebiet

Bei der Erfindung wird ausgegangen von einem Schutzverfahren und von einer Schutzeinrichtung zur Erfassung von Asynchronismus beim Frequenzanlauf von Synchronmaschinen nach dem Oberbegriff der Patentansprüche 1 bzw. 2.

### Stand der Technik

Mit den Oberbegriffen der Ansprüche 1 und 2 nimmt die Erfindung auf einen Stand der Technik Bezug, wie er aus der Schweizer Firmenzeitschrift: Brown Boveri Mitt. 7/8 (1983) S. 295-302, bekannt ist. Dort sind für Synchronmaschinen, die sowohl generatorisch wie auch motorisch betrieben werden, wie Pumpspeicherwerke und Gasturbinengruppen, verschiedene Anfahrmethoden angegeben, die je nach Netzverhältnissen ausgewählt und optimiert werden. Beim sog. Voll-Frequenzanlauf werden die beiden elektrisch verbundenen Schenkelpolmaschinen von statischen Erregereinrichtungen bereits im Stillstand erregt. Der mechanisch angetriebene Generator liefert dem Motor anfangs einen Statorstrom sehr kleiner Frequenz, der im Motor ein elektromagnetisches Drehmoment erzeugt. Unter gewissen angegebenen Bedingungen, die schon bei einem Verhältnis der Maschinenleistungen von 1:20 erfolgreich angewendet wurden, synchronisiert der Motor mit dem Generator. Dabei sind die Statoren beider Maschinen, ggf. über grosse Entfernungen, elektrisch verbunden, erforderlichenfalls unter Zwischenschaltung mehrerer Transformatoren. Beim sog. Teilfrequenzanlauf läuft der Motor zuerst asynchron an. Er wird erst nach dem Erreichen der Generatordrehzahl erregt und anschliessend synchron hochgefahren.

Für den Fall, dass der Feldstrom zu gering ist oder der Turbinenregler den Generator zu schnell hochfährt, so dass der Motor nicht mitkommt, ist keine Schutzmassnahme angegeben. Beim synchronen Hochfahren des Motors kann es zu einem Ausser-Tritt-Fallen, d.h. zu starkem Schlupf, kommen, was zu unzulässig hohen Erwärmungen der Starkstromteile des Motors sowie zu Ueberspannungen im Feldstromkreis führen kann und verhindert werden muss.

### Darstellung der Erfindung

Die Erfindung, wie sie in den Patentansprüchen 1 und 2 definiert ist, löst die Aufgabe, während des Hochlaufs einer Synchronmaschine eindeutig zwischen deren synchronem, d.h. ungestörtem Zustand, und deren asynchronem, d.h. gestörtem Zustand, zu unterscheiden und bei gestörtem Zustand eine Schutzmassnahme für die Synchronmaschine auszulösen.

Ein Vorteil der Erfindung liegt darin, dass der unzulässige asynchrone Zustand sicher und rechtzeitig erkannt wird, womit eine vorzeitige Alterung der Wicklungsisolation durch Erwärmung sowie eine Beschädigung des Stromrichters durch Ueberspannung vermieden werden. Ein weiterer Vorteil besteht darin, dass nur am Ort der motorisch betriebenen Synchronmaschine gemessen zu werden braucht, womit eine teure und weniger sichere Fernmessung entfällt. Zudem erlaubt die erfindungsgemässe Schutzeinrichtung mit relativ einfachen Mitteln eine selektive Fehlererkennung, indem Polradpendelungen und Einschaltschwingungen sowie netzfrequente Einstreuungen sicher nicht zum Ansprechen der Schutzeinrichtung führen.

### Kurze Beschreibung der Zeichnungen

Die Erfindung wird nachstehend anhand von Ausführungsbeispielen erläutert. Es zeigen:
Fig. 1 Ein Schaltbild eines Generators mit Turbine beim Frequenzanlauf einer Synchronmaschine mit Erregereinrichtung und zugehöriger Schutzeinrichtung und
Fig. 2 eine Schaltung eines Funktionsgenerators für die Schutzeinrichtung gemäss Fig. 1 .

### Wege zur Ausführung der Erfindung

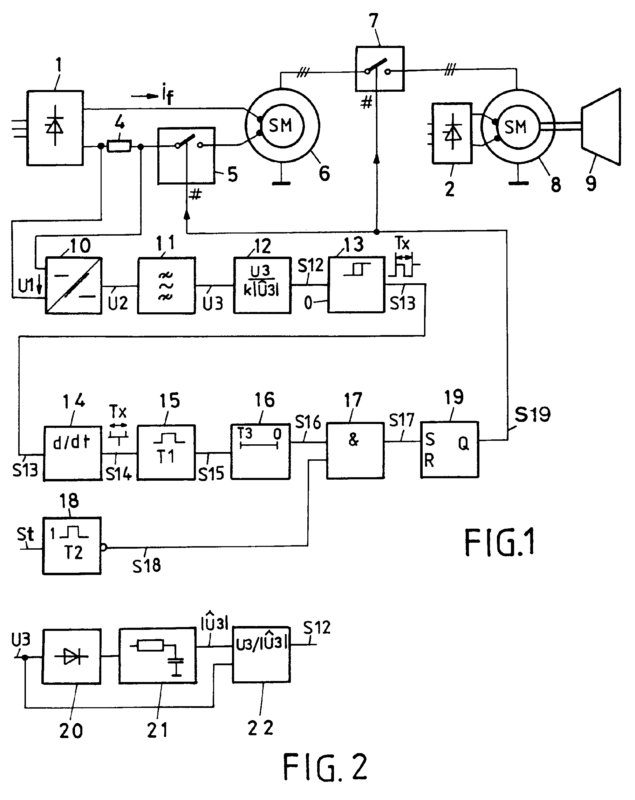

In Fig. 1 ist mit 1 eine Gleichstromquelle bzw. ein Gleichstromsteller oder Erregerstromrichter bezeichnet, der die Feldwicklung einer hier als Motor betriebenen Synchronmaschine 6, vorzugsweise in Schenkelpolbauart, mit einem Erregerstrom i_{f} speist. Im Erregerstromkreis befindet sich ein Feldschalter 5 und ein Messwiderstand 4 für den Erregerstrom i_{f}.

Die Synchronmaschine 6 ist statorseitig über einen zweiten Schalter bzw. Hochspannungsschalter 7 mit dem Stator einer Synchronmaschine (Generator) 8 elektrisch verbunden, welche ebenfalls als Schenkelpolmaschine ausgeführt und rotorseitig mit einer Turbine 9 antriebsmässig mechanisch gekoppelt ist und von einem Erregerstromrichter 2 gespeist wird.

Am Messwiderstand 4 wird eine zum Erregerstrom i_{f} proportionale Messspannung U1 abgegriffen und einem Gleichspannungswandler bzw. Trennumformer 10 zugeführt, der ausgangsseitig ein bezugspotentialfreies Spannungssignal U2 liefert, das zum Feld- bzw. Erregerstrom i_{f} proportional ist. Dieses Spannungssignal U2 wird anschliessend in einem Frequenz- bzw. Bandpassfilter 11 mit den Eckfrequenzen von 2,5 Hz resp. 50 Hz gefiltert. Somit werden der Gleichstromanteil 1, Pendelfrequenzen bis 2,5 Hz sowie eine etwa eingestreute, höherfrequente Spannung (> 50 Hz) aus dem Spannungssignal U2 herausgefiltert. Ein in einem Filterausgangssignal U3 des Bandpassfilters 11 dann vorhandenes Wechselspannungssignal variiert von etwa 2,5 Hz bis 50 Hz und ist proportional zur Schlupffrequenz. Durch die Filterung im Bandpassfilter 11 wird bereits eine Trennung zwischen Polradpendelungen und induktionsbedingten Pendelungen infolge eines Asynchronanlaufs erreicht.

Das Filterausgangssignal U3 wird anschliessend in einem Funktionsgeber 12, der näher in Verbindung mit Fig. 2 beschrieben wird, auf konstante Amplitude gebracht, indem das Frequenzausgangssignal U3 selbst durch den Betrag der maximalen Signalamplitude 1 3 dividiert wird. Eine kleine Offsetspannung am Eingang eines zur Division verwendeten Operationsverstärkers sorgt dafür, dass bei fehlendem Filterausgangssignal U3 nicht durch Null dividiert wird. k bedeutet einen vorgebbaren Faktor, der vorzugsweise = 1 gewählt wird.

Ein sinusförmiges Ausgangssignal S12 wird vom Ausgang des Funktionsgebers 12 mittels eines Schwellwert-Detektors bzw. Schmitt-Triggers 13 mit einem Schwellwert 0 in eine gleichfrequente Rechteckspannung bzw. ein Rechteckspannungssignal S 13 umgewandelt.

Das Rechteckspannungssignal S13 ist über ein Differenzierglied 14 einem nachtriggerbaren, monostabilen Kippglied 15 zugeführt. Ein Ausgangssignal S14 des Differenziergliedes 14 zeigt abwechselnd positive und negative Impulse, deren Abstand gleich der Periodendauer Tx des zu prüfenden Wechselspannungssignals ist.

Das Kippglied 15 hat eine vorgebbare Rückfallzeitdauer T1 im Bereich von 0,1 s - 0,5 s (entsprechend 10 Hz bis 2 Hz), vorzugsweise von 0,4 s. Ausgangsseitig ist das Kippglied 15 über ein Zeitglied bzw. Verzögerungsglied 16 mit einem 1. Eingang eines UND-Gliedes 17 verbunden. Das Verzögerungsglied 16 hat eine vorgebbare Ansprechverzögerung T3 für den Uebergang vom internen 0-Zustand zum internen 1-Zustand am Ausgang in bezug auf denselben Uebergang am Eingang im Bereich von 2 s bis 5 s, vorzugsweise von T3 = 3 s. Der Uebergang vom internen 1-Zustand zum internen 0-Zustand am Ausgang erfolgt ohne Verzögerung in bezug auf denselben Uebergang am Eingang. Auf diese Weise erzeugen Ausgangssignale S15 = 1, die kürzer als die Ansprechverzögerung bzw. Mindestdauer T3 andauern, kein Fehlersignal S16 = 1 am Ausgang des Verzögerungsgliedes 16.

Ein Sperrzeitglied bzw. ein nicht nachtriggerbares, monostabiles Kippglied 18 mit negiertem Ausgang erzeugt in Abhängigkeit von einem von Hand oder von einer nicht dargestellten, übergeordneten Steuereinrichtung vorgebbaren Startsignal Stfürdie Synchronisation der Synchronmaschine 6 ausgangsseitig während einer vorgebbaren Sperrzeitdauer T2 im Bereich von 1 s - 10 s, vorzugsweise von 5 s, ein Sperrsignal S18 = 0, das einem zweiten Eingang des UND-Gliedes 17 zugeführt ist und während der SperrzeitdauerT2 dessen Ausgangssignal S17 auf logisch 0 hält. Während der übrigen Zeit ist S18 = und somit das UND-Glied 17 vorbereitet, so dass ein Ausgangssignal S16 = 1 am Ausgang des Verzögerungsgliedes 16 das UND-Glied 17 passieren und ausgangsseitig ein Signal S17 = 1 erzeugen kann.

Anstelle des Kippgliedes 18 kann auch ein Zeitrelais verwendet werden, um am Beginn des Anlaufs der Synchronmaschine 6 auftretende Einschwingvorgänge auszublenden und ein unbegründetes Ansprechen der Schutzeinrichtung bzw. ein Oeffnen der während des Frequenzanlaufs geschlossenen Schalter 5 und 7 zu verhindern.

Ausgangsseitig ist das UND-Glied 17 mit dem Setz- bzw. S-Eingang eines RS-Flipflops 19 verbunden. Das RS-Flipflop 19 ist ausgangsseitig mit den Steuereingängen der Schalter 5 und 7 verbunden, welche bei S19 = 1 öffnen und die jeweilige Schaltstrecke unterbrechen, so dass die Synchronmaschine 6 elektrisch abgeschaltet ist.

Nach einem Beheben der Störung können die Schalter 5 und 7 durch ein Rücksetzsignal von einer übergeordneten automatischen Kraftwerk-Ablaufsteuerung auf den Rücksetz- bzw. R-Eingang des RS-Flipflops 19 wieder geschlossen werden.

Der Abstand der positiven Impulse des Signals S14 ist die Periodendauer Tx des Wechselspannungssignals, das auf einen Fehlerzustand im Frequenzanlauf der Synchronmaschine 6 zu untersuchen ist. Die positiven Impulse von S14 steuern das Kippglied 15 an, dessen Rückfallzeitdauer T1 etwas kleiner als die Periodendauer der höchsten anlagespezifischen Polrad-Pendelfrequenz eingestellt ist. Diese anlagespezifischen Pendelfrequenzen liegen zwischen 0,7 Hz und 1,5 Hz.

Das Kippglied 15 gibt unter diesen Bedingungen ein Dauersignal nur dann ab, wenn die Frequenz der erfassten Wechselspannung grösser als die anlagenspezifische Polrad-Pendelfrequenz und daher mit Sicherheit eine Folge von asynchronem Betrieb ist. Wenn das Signal S15 = 1 länger als die vorgebbare Mindestdauer T3 anliegt und wenn nicht gleichzeitig das UND-Glied 17 wegen eines Einschwingvorgangs durch das Startsignal St gesperrt ist, dann erscheint am Ausgang des UND-Gliedes 17 ein Ausgangssignal S18 = 1, das in dem nachgeschalteten RS-Flip- flop 19 gespeichert wird, wobei dessen Ausgangssignal S19 = 1 wird.

Fig. 2 zeigt eine Ausführungsbeispiel für den Funktionsgeber 12 gemäss Fig. 1. Mit 20 ist ein Gleichrichter bezeichnet, dem eingangsseitig das Filterausgangssignal U3 zugeführt ist und der ausgangsseitig über einen RC-Tiefpass 21 mit einem Dividierglied 22 verbunden ist, welches die aktuelle Amplitude des Eingangssignals U3 durch den positiven Maximalwert U3 der Amplitude dieses Wechselspannungssignals dividiert. Das zu prüfende Wechselspannugnssignal U3 wird dadurch auf konstante Amplitude gesteuert.

Wichtig ist, dass durch einen Asynchronlauf bedingte Schlupf-bzw. Wechselstromkomponenten im Erregerstrom i_{f} der Synchronmaschine 6, die oberhalb von anlagespezifischen Pendelfrequenzen von ca. 1,5 Hz liegen, sicher detektiert und zur Auslösung einer Schutzmassnahme verwendet werden, sofern sie länger als eine vorgebbare Mindestzeitdauer T3 andauern. Langsamere Wechselspannungskomponenten sollen nicht zur Abschaltung der Synchronmaschine führen. Die Schlupffrequenz der zu prüfenden Wechselstromkomponente wird nicht direkt gemessen. Stattdessen wird geprüft, ob die der gesuchten Schlupffrequenz entsprechende Schlupf-Periodendauer innerhalb eines vorgebbaren Periodendauerintervalls liegt.

Die erfindungsgemässe Schutzeinrichtung kann auch bei einem Anlauf einer Synchronmaschine im Phasenschieberbetrieb verwendet werden sowie beim synchronen Hochlauf der 2 Wellenstränge von Kreuzverbund-Dampfturbogruppen.

Statt einer Periodendauererfassung kann selbstverständlich eine Frequenzerfassung der schlupfbedingten Wechselspannungen mit einer zur Periodendauerauswertung analogen Auswertung vorgenommen werden.

Für jede der beiden Maschinen 6 und 8 kann ein Feldschalter 5 und ein maschinennaher Hochspannungsschalter 7 vorgesehen sein. Die Speicherung eines Fehlerzustandes kann in den Schaltern implementiert sein, wobei sich das RS-Kippglied 19 erübrigt.

## Patentansprüche

1. SchutzverfahrenzurErfassungvonAsynchronismus beim Frequenzanlauf einer Synchronmaschine,
a) wobei die Synchronmaschine (6) mit vorgebbarer Nennfrequenz und anlagespezifischen Pendelfrequenzen, die durch Polradpendelungen verursacht sind, ihren Feld- bzw. Erregerstrom (i_{f}) von einem Erregerstromrichter (1) bezieht,
dadurch gekennzeichnet,
b) dass der Erregerstrom (i_{f}) auf das Vorhandensein von Schlupffrequenzen im Frequenzbereich zwischen den Pendelfrequenzen und der Nennfrequenz überwacht wird und
c) dass zumindest der Erregerstrom (i_{f}) der Synchronmaschine (6) unterbrochen bzw. abgeschaltet wird, wenn mindestens eine dieser Schlupffrequenzen länger als eine vorgebbare Zeitdauer (T3) auftritt, welche Zeitdauer so gewählt ist, dass innerhalb dieser Zeitdauer keine unzulässig hohe Erwärmung der Synchronmaschine (6) eintritt.

2. Schutzeinrichtung zur Erfassung von Asynchronismus beim Frequenzanlauf einer Synchronmaschine (6)
a) die über einen Errregerstromkreis mit einem Erregerstromrichter (1) in Wirkverbindung steht, von welchem die Synchronmaschine ihren Erregerstrom (i_{f}) bezieht,
b) mit einem Feldschalter (5) innerhalb des Erregerstromkreises der Synchronmaschine, dadurch gekennzeichnet,
c) dass eine Periodendauer- oder Frequenzerfassungseinrichtung (4, 10 - 14) zur Erfassung mindestens einer Wechselstromkomponente des Erregerstromes (i_{f}) mit dem Erregerstromkreis in Wirkverbindung steht, welche geeignet ist, Schlupffrequenzen, die grösser als an lagespezifische Pendelfrequenzen und kleiner als die Nennfrequenz (50 Hz) der Synchronmaschine (6) sind, zu erfassen,
d) welche Frequenzerfassungseinrichtung ausgangsseitig mit einem ersten Zeitglied (15) mit einer vorgebbaren Rückfallzeitdauer (T1) in Wirkverbindung steht, die kleiner ist als die Periodendauer der höchsten Pendelfrequenz,
e) dass das erste Zeitglied (15) ausgangsseitig mit einem zweiten Zeitglied (16) mit einer vorgebbaren Ansprechverzögerung (T3) für den Uebergang vom internen 0-Zustand zum internen 1-Zustand in Wirkverbindung steht, derart, dass das zweite Zeitglied (16) ausgangsseitig (S16) nur dann einen 1-Zustand annimmt, wenn sein Eingangssignal (S15) mindestens während der Dauer der vorgebbaren Ansprechverzögerung (T3) ununterbrochen anliegt, und
f) dass das zweite Zeitglied (16) ausgangsseitig mit mindestens dem Feldschalter (5) innerhalb des Erregerstromkreises in Steuerverbindung steht, derart, dass der Feldschalter öffnet, wenn das zweite Zeitglied ausgangsseitig (S16 = 1) seinen 1-Zustand annimmt.

3. Schutzeinrichtung nach Anspruch 2, dadurch gekennzeichnet, dass die Frequenzerfassungseinrichtung (4, 10 - 14) ein Bandpassfilter (11) aufweist, das Frequenzen sperrt,
a) die kleinerodergleich den für die Synchronmaschine (6) spezifische Pendelfrequenzen sind und
b) die grösser oder gleich der für die Synchronmaschine spezifischen Nennfrequenz (50 Hz) sind.

4. Schutzeinrichtung nach Anspruch 3, dadurch gekennzeichnet,
a) dass die Frequenzerfassungseinrichtung (4, 10 - 14) einen Schwellwertdetektor (13) aufweist, der eingangsseitig mit dem Ausgang des Frequenzfilters bzw. Bandpassfilters (11) in Wirkverbindung steht, und ausgangsseitig ein 1-Signalliefert, wenn dessen Eingangssignal einen vorgebbaren Schwellwert überschreitet,
b) insbesondere, dass der Schwellwertdetektor ein 0-Detektor mit dem Schwellwert 0 ist.

5. Schutzeinrichtung nach Anspruch 4, dadurch gekennzeichnet,
a) dass der Schwellwertdetektor (13) eingangsseitig über einen Funktionsgeber (12) mit dem Ausgang des Frequenzfilters bzw. Bandpassfilters (11) in Wirkverbindung steht, welcher Funktionsgeber ausgangsseitig ein Signal (S12) liefert, das proportional zur Schlupffrequenz ist,
b) insbesondere, dass der Funktionsgeber (12) die Funktion U3/(k· bildet, wobei U3 dessen Eingangssignal, | U3 den Betrag der maximalen Signalamplitude von U3 und k einen vorgebbaren Faktor bedeuten.

6. Schutzeinrichtung nach einem der Ansprüche 2 bis 5, dadurch gekennzeichnet,
a) dass ein Sperr-Zeitglied (18) vorgesehen ist, das in Abhängigkeit von einem vorgebbaren Startsignal (St) während einer vorgebbaren Sperrzeitdauer (T2) ausgangsseitig ein Sperrsignal (S18) liefert, das während seiner Dauer (T2) ein Oeffnen des mindestens einen Feldschalters (5) verhindert,
b) insbesondere, dass die Sperrzeitdauer (T2) die Einschwing-Zeitdauer beim Anfahren der Synchronmaschine (6) ist und im Bereich 1 s - 10 s liegt.

7. Schutzeinrichtung nach Anspruch 6, dadurch gekennzeichnet,
a) dass das Sperr-Zeitglied ein monostabiles Kippglied (18) ist,
b) insbesondere, dass es ein Zeitrelais ist,
c) das ausgangsseitig über ein logisches Verknüpfungsglied,
d) insbesondere, dass es über ein UND-Glied (17) mit dem mindestens einen Feldschalter (5) in Steuerverbindung steht,
e) wobei das logische Verknüpfungsglied (17) eingangsseitig ferner mit dem Ausgang des Sperr-Zeitgliedes (18) in Wirkverbindung steht.

8. Schutzeinrichtung nach einem der Ansprüche 2 bis 7, dadurch gekennzeichnet,
a) dass dem Schwellwertdetektor (13) ein Differenzierglied (14) nachgeordnet ist,
b) das ausgangsseitig mit dem ersten Zeitglied (15) in Wirkverbindung steht.

9. Schutzeinrichtung nach einem der Ansprüche 2 bis 8, dadurch gekennzeichnet,
a) dass die Rückfallzeitdauer (T1) des ersten Zeitgliedes (15) im Bereich von 0,1 s bis 0,5 s liegt und
b) dass die Verzögerung (T2) des zweiten Zeitgliedes (16) im Bereich von 2 s bis 5 s liegt.

10. Schutzeinrichtung nach einem der Ansprüche 2 bis 9, dadurch gekennzeichnet,
a) dass die im Erregerstrom (i_{f}) der Synchronmaschine (6) induzierte Wechselstromkomponente mittels eines Trennumformers (10) erfasst wird,
b) dass die Synchronmaschine statorseitig über mindestens einen Hochspannungsschalter (7) von einem Generator (8) elektrisch gespeist wird und
c) dass das zweite Zeitglied (16) ausgangsseitig mit einem Feldschalter (5) und einem Hochspannungsschalter (7) in den Stromkreisen der Synchronmaschine (6) in Steuerverbindung steht,
d) insbesondere, dass das zweite Zeitglied (18) über ein RS-Flipflop (19) mit den beiden Schaltern (5, 7) in Steuerverbindung steht.

## Claims

1. Protection method for detecting asynchronism in synchronous starting of a synchronous machine,
a) in which the synchronous machine (6), with predeterminable nominal frequency and plant-specific oscillation frequencies caused by phase swings obtains its field or exciter current (if) from an exciter converter (1), characterised in that
b) the exciter current (if) is monitored for the presence of slip frequencies within a frequency range between the oscillation frequencies and the nominal frequency, and
c) that at least the exciter current (if) of the synchronous machine (6) is interrupted ordis- connected if at least one of these slip frequencies occurs for a longer period than a predeterminable period (T3), which period is selected in such a manner that no inadmissibly high heating of the synchronous machine (6) occurs within this period.

2. Protection device for detecting asynchronism in the synchronous starting of a synchronous machine (6)
a) which is effectively connected via an exciter circuit to an exciter converter (1) from which the synchronous machine obtains its exciter current (if),
b) comprising a field switch (5) within the exciter circuit of the synchronous machine, characterised in that
c) a period or frequency detections device (4, 10 - 14) for detecting at least one alternating-current component of the exciter current (if) is effectively connected to the exciter circuit, which device is suitable for detecting slip frequencies which are higher than plant-specific oscillation frequencies and lower than the nominal frequency (50 Hz) of the synchronous machine (6),
d) the output of which frequency detection device is effectively connected to a first timing section (15) with a predeterminable release time (T1) which is shorter than the period of the highest oscillation frequency,
e) that the output of the first timing section (15) is effectively connected to a second timing section (16) having a predeterminable switching delay (T3) for the transition from the internal 0 state to the internal 1 state, in such a manner that the output (S16) of the second timing section (16) only assumes a 1 state if its input signal (S15) is uninterruptibly present at least during the period of the predeterminable switching delay (T3), and
f) that the output of the second timing section (16) is connected to control at least the field switch (5) within the exciter circuit, in such a manner that the field switch opens when the second timing section assumes its 1 state at the output (S16 = 1).

3. Protection device according to Claim 2, characterised in that the frequency detection device (4, 10 - 14) exhibits a bandpass filter (11) which blocks frequencies
a) which are lower than or equal to the oscillation frequencies specific for the synchronous machine (6) and
b) which are greater than or equal to the nominal frequency (50 Hz) which is specificforthe synchronous machine.

4. Protection device according to Claim 3, characterised in that
a) the frequency detection device (4, 10 - 14) exhibits a threshold detector (13) the input of which is effectively connected to the output of the frequency filter or bandpass fitter (11) and the output of which supplies a 1 signal when its input signal exceeds a predeterminable threshold,
b) in particular, the threshold detector is a 0 detector having the threshold 0.

5. Protection device according to Claim 4, characterised in that
a) the input of the threshold detector (13) is effectively connected via a function generator (12) to the output of the frequency filter or bandpass filter (11), the output of which function generator supplies a signal (S12) which is proportional to the slip frequency,
b) particularly, the function generator (12) forms the function _{U3 /} (ₖ . u3), where U3 is its input signal, u3 is the amount of the maximum signal amplitude of U3 and k is a predeterminable factor.

6. Protection device according to one of Claims 2 to 5, characterised in that
a) a blocking time section (18) is provided which supplies in dependence on a predeterminable start signal (St) during a predeterminable blocking time (T2), a blocking signal (S18) at the output which prevents the opening of at least one field switch (5) during its duration (T2),
b) in particular, the blocking time (T2) is the settling time during the starting of the synchronous machine (6) and is within a range of 1s-10s.

7. Protection device according to Claim 6, characterised in that
a) the blocking time section is a monostable flip-flop (18),
b) in particular, is a timing relay,
c) the output of which is connected via a logic gate,
d) in particular, via an AND gate (17) to control the at least one field switch (5),
e) the input of the logic gate (17) also being effectively connected to the output of the blocking time section (18).

8. Protection device according to one of Claims 2 to 7, characterised in that
a) the threshold detector (13) is followed by a differentiating section (14),
b) the output of which is effectively connected to the first timing section (15).

9. Protection device according to one of Claims 2 to 8 characterised in that
a) the release time (T1) of the first timing section (15) is within a range of from 0.1s to 0.5s and
b) the delay (T2) of the second timing section (16) is within a range of from 2s to 5s.

10. Protection device according to one of Claims 2 to 9, characterised in that
a) the alternating-current component induced in the exciter current (if) of the synchronous machine (6) is detected by means of an isolating converter (10),
b) the stator of the synchronous machine is electrically fed by a generator (8) via at least one high-voltage switch (7), and
c) the output of the second timing section (16) is connected to control a field switch (5) and a high-voltage switch (7) in the circuits of the synchronous machine (6),
d) in particular, the second timing section (18) is connected to control the two switches (5, 7) via an RS flip-flop (19).

## Revendications

1. Procédé de protection pour la détection d'un asynchronisme lors du démarrage en fréquence d'une machine synchrone,
a) la machine synchrone (6) à fréquence nominale prédéfinie et à fréquences de découpage spécifiques à l'installation, qui sont provoquées par des oscillations pendulaires, recevant son courant de champ ou d'excitation (i_{f}) d'un convertisseur de courant d'excitation (1), caractérisé en ce
b) que le courant d'excitation (i_{f}) est surveillé pour détecter la présence de fréquences de glissement dans le domaine fréquentiel entre les fréquences de découpage et la fréquence nominale, et
c) qu'au moins le courant d'excitation (i_{f}) de la machine synchrone (6) est interrompu ou coupé lorsqu'au moins l'une de ces fréquences de glissement apparaît pendant un laps de temps plus long qu'une durée prédéterminée (T3), cette durée étant choisie telle que, dans cette durée, aucun échauffement trop élevé de la machine synchrone (6) ne se produise.

2. Dispositif de protection pour la détection d'un asynchronisme lors du démarrage en fréquence d'une machine synchrone (6),
a) qui est en liaison active, par l'intermédiaire d'un circuit de courant d'excitation, avec un convertisseur de courant d'excitation (1), duquel la machine synchrone reçoit son courant d'excitation (i_{f}),
b) comportant un interrupteur de champ (5) à l'intérieur du circuit de courant d'excitation de la machine synchrone,
caractérisé en ce
c) qu'un dispositif détecteur de durée de periode ou de fréquence (4, 10 - 14) destine à détecter au moins une composante de courant alternatif du courant d'excitation (i_{f}) est en liaison active avec le circuit de courant d'excitation, et convient pour détecter des fréquences de glissement qui sont supérieures aux fréquences de découpage spécifiques à l'installation et inférieures à la fréquence nominale (50 Hz) de la machine synchrone (6),
d) lequel dispositif de détection de fréquence est en liaison active, à sa sortie, avec un premier relais temporisateur (15) présentant une durée de déplacement prédéfinie (T1) qui est inférieure à la durée de periode de la fréquence de découpage la plus haute,
e) que le premier relais temporisateur (15) est en liaison active, à sa sortie, avec un second relais temporisateur (16) présentant un retard de réaction prédéfini (T3) pour le passage de l'état 0 interne à l'état 1 interne, de telle sorte que le second relais temporisateur (16), à sa sortie (S16), ne passe dans l'état 1 que lorsque son signal d'entrée (S15) est appliqué sans interruption au moins pendant la durée du retard de réaction prédéfini (T3), et
f) que le second relais temporisateur (16) est en liaison de commande, à sa sortie, avec au moins l'interrupteur de champ (5) à l'intérieur du circuit de courant d'excitation, de telle sorte que l'interrupteur de champ s'ouvre lorsque le second relais temporisateur passe à sa sortie (S16 = 1) dans son état 1.

3. Dispositif de protection suivant la revendication 2, caractérisé en ce que le dispositif de détection de fréquence (4, 10 - 14) comporte un filtre passe-bande (11) qui bloque les fréquences
a) qui sont inférieures ou égales aux fréquences de découpage spécifiques pour la machine synchrone, et
b) qui sont supérieures ou égales à la fréquence nominale spécifique (50 Hz) de la machine synchrone.

4. Dispositif de protection suivant la revendication 3, caractérisé en ce
a) que le dispositif détecteur de fréquence (4, 10 - 14) comporte un détecteur de valeur de seuil (13) qui est en liaison active, par son entrée, avec la sortie du filtre de fréquence ou du filtre passe-bande (11), et qui fournit à sa sortie un signal 1 lorsque son signal d'entrée dépasse une valeur de seuil prédéfinie,
b) qu'en particulier, le détecteur de valeur de seuil est un détecteur de 0 à valeur de seuil 0.

5. Dispositif de protection suivant la revendication 4, caractérisé en ce
a) que le détecteur de valeur de seuil (13) est en liaison active à son entrée, par l'intermédiaire d'un générateur de fonctions (12), avec la sortie du filtre de fréquence ou du filtre passe-bande (11), ce générateur de fonctions fournissant à sa sortie un signal (S12) qui est proportionnel à la fréquence de glissement,
b) qu'en particulier, le générateur de fonctions (12) forme la fonction : U3/(k. |Û3| ) où U3 est son signal d'entrée, U3 ! est la valeur absolue de l'amplitude de signal maximale de U3 et k est un facteur prédéfini.

6. Dispositif de protection suivant l'une quelconque des revendications 2 à 5, caractérisé en ce
a) qu'un relais temporisateur de blocage (18) est prévu qui, en fonction d'un signal de départ prédéfini (St) fournit, pendant une durée de blocage prédéfinie (T2), à sa sortie, un signal de blocage (S18) qui, pendant sa durée (T2), empêche une ouverture de l'au moins un interrupteur de champ (5),
b) qu'en particulier, la durée de blocage (T2) est la durée de régime transitoire lors du démarrage de la machine synchrone (6) et est comprise dans l'intervalle de 1 s à 10 s.

7. Dispositif de protection suivant la revendication 6, caractérisé en ce
a) que le relais temporisateur de blocage est une bascule monostable (18),
b) qu'en particulier, il s'agit d'un relais à temps,
c) qui, à sa sortie, est en liaison de commande par l'intermédiaire d'un élément de combinaison logique,
d) en particulier, par l'intermédiaire d'un élément ET (17), avec l'au moins un interrupteur de champ (5),
e) l'élément de combinaison logique (17) étant, en outre, en liaison active, à son entrée, avec la sortie du relais temporisateur de blocage (18).

8. Dispositif de protection suivant l'une quelconque des revendications 2 à 7, caractérisé en ce
a) que le détecteur de valeur de seuil (13) est suivi d'un élément différenciateur (14),
b) qui, à sa sortie, est en liaison active avec le premier relais temporisateur (15).

9. Dispositif de protection suivant l'une quelconque des revendications 2 à 8, caractérisé en ce
a) que la durée de déplacement (T1) du premier relais temporisateur (15) est comprise entre 0,1 s et 0,5 s, et
b) que le retard (T2) du second relais temporisateur (16) est compris entre 2 s et 5 s.

10. Dispositif de protection suivant l'une quelconque des revendications 2 à 9, caractérisé en ce
a) que la composante de courant alternatif induite dans le courant d'excitation (i_{f}) de la machine synchrone (6) est détectée au moyen d'un convertisseur de séparation (10),
b) que la machine synchrone est alimentée électriquement, du côte du stator, par l'intermédiaire d'au moins un interrupteur haute tension (7) par un générateur (8), et
c) que le second relais temporisateur (16) est en liaison de commande, à sa sortie, avec un interrupteur de champ (5) et avec un interrupteur haute tension (7) dans le circuit de la machine synchrone (6),
d) qu'en particulier, le second relais temporisateur (18) est en liaison de commande, par l'intermédiaire d'une bascule RS (19), avec les deux interrupteurs (5, 7).
